(19) **Europäisches Patentamt**
**European Patent Office**
**Office européen des brevets**

(11) **EP 3 547 634 B1**

(12) **EUROPEAN PATENT SPECIFICATION**

(45) Date of publication and mention
of the grant of the patent:
**24.01.2024 Bulletin 2024/04**

(21) Application number: **17874886.9**

(22) Date of filing: **22.11.2017**

(51) International Patent Classification (IPC):
**H04L 9/40** *(2022.01)*    **G06F 21/62** *(2013.01)*

(52) Cooperative Patent Classification (CPC):
**G06F 21/6209; G06F 21/6218; H04L 63/101;**
**H04L 63/105;** G06F 2221/2145

(86) International application number:
**PCT/CN2017/112344**

(87) International publication number:
**WO 2018/095326 (31.05.2018 Gazette 2018/22)**

(54) **METHOD AND APPARATUS FOR DETERMINING ACCESS PERMISSION, AND TERMINAL**

VERFAHREN UND VORRICHTUNG ZUR BESTIMMUNG DER ZUGRIFFSBERECHTIGUNG UND
ENDGERÄT

PROCÉDÉ ET APPAREIL DE DÉTERMINATION D'AUTORISATION D'ACCÈS, ET TERMINAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.11.2016 CN 201611047578**

(43) Date of publication of application:
**02.10.2019 Bulletin 2019/40**

(73) Proprietor: **ZTE Corporation**
**Shenzhen, Guangdong 518057 (CN)**

(72) Inventors:
• **TONG, Yao**
**Shenzhen**
**Guangdong 518057 (CN)**
• **PENG, Yong**
**Shenzhen**
**Guangdong 518057 (CN)**

• **MO, Haining**
**Shenzhen**
**Guangdong 518057 (CN)**
• **SHEN, Guang**
**Shenzhen**
**Guangdong 518057 (CN)**

(74) Representative: **Aipex B.V.**
**Vestdijk 51**
**5611 CA Eindhoven (NL)**

(56) References cited:
EP-A1- 1 084 464    EP-B1- 1 084 464
CN-A- 101 047 576    CN-A- 102 843 366
US-A- 5 414 852    US-A1- 2012 096 521
US-A1- 2016 203 335    US-B2- 8 577 885

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

TECHNICAL FIELD

The present invention relates to the field of data security and, in particular, to a method and apparatus for determining an access right, and a terminal.

BACKGROUND

In the field of cloud computing data centers, Software as a Service (SaaS) is a new software application model that greatly reduces the investment of enterprises in information infrastructure. Currently, there are three types of data models for a SaaS system: a standalone database model, a shared database separate model, and a shared database shared model. In the first model, each customer physically has its own set of data that is stored separately, but the biggest problem with this data model is that the corresponding deployment and maintenance costs are high, the consumption of hardware resources will be significantly higher than that in the other two solutions, and a server will only support a limited number of customers. In the second data model, the customer achieves a certain balance between data sharing and data isolation by using a standalone mode, but the disadvantage of this solution is that when the system becomes abnormal and the historical backup data needs to be restored, the process will become relatively complex. The third data model has minimum hardware costs and maintenance costs, and each server can support a maximum number of customers, but since all customers use the same data table, more additional development costs may be required to ensure data security so as to ensure that one customer never accesses other customers' data in the case of a system exception.

In the study of conventional multi-tenant access control, to achieve security of resource sharing and information exchange between different organizations and tenants and to ensure legal access, the control policy of each tenant is generally integrated into the global access control policy so that security interoperability between tenants is implemented. In this case, security problems generally include secure network access, and system authority model. In terms of the secure network access, exchanged information is encrypted so that user information is prevented from being stolen. In terms of the system privilege model, roles are switched between tenants to achieve the purpose of the secure access control.

However, when the third data model is used, the characteristic of the shared database of tenant data results in poor data isolation between tenants and affects the security of the data. Thus, a model or a method for secure access control in a data-center multi-tenant scenario is needed, where this model or method has the lowest hardware costs and maintenance costs and ensures the security of the data-center tenant data.

No effective solution has been proposed for the problem of poor data security in the existing art.

Further relevant technologies are also known from EP 1084464 A1 which relates to security model using restricted tokens, and US 5414852 A which relates to method for protecting data in a computer system.

SUMMARY

Embodiments of the present invention provide a method and apparatus for determining an access right, and a terminal to solve at least the problem of poor data security in the existing art.

The invention is set out in the appended set of claims.

BRIEF DESCRIPTION OF DRAWINGS

The accompanying drawings described herein are used to provide a further understanding of the present invention, and form a part of the present application. The illustrative embodiments and the description thereof in the present invention are intended to explain the present invention and not to limit the present invention in an improper way. In the accompanying drawings:

FIG. 1 is a schematic diagram of an optional computer terminal according to an embodiment of the present invention;

FIG. 2 is a schematic diagram of optional object identifiers according to an embodiment of the present invention;

FIG. 3 is a schematic diagram of an optional role forest according to an embodiment of the present invention;

FIG. 4 is a schematic diagram of an optional security identifier association according to an embodiment of the present invention;

FIG. 5 is a flowchart of a method for determining an access right according to an embodiment of the present invention;

FIG. 6 is a schematic diagram of an optional system architecture according to an embodiment of the present invention;

FIG. 7 is a flowchart of an optional method for determining an access right according to an embodiment of the present invention;

FIG. 8 is a schematic diagram of optional security identifiers according to an embodiment of the present invention;

FIG. 9 is a flowchart of an optional method for determining an access right according to an embodiment of the present invention; and

FIG. 10 is a schematic diagram of an apparatus for determining an access right according to an embodiment of the present invention.

DETAILED DESCRIPTION

The present invention will be detailed below with reference to the accompanying drawings in conjunction with the embodiments. If not in collision, the embodiments described herein and the features thereof can be combined with each other.

It is to be noted that the terms "first", "second" and the like in the description, claims and drawings of the present invention are used to distinguish between similar targets and are not necessarily used to describe a particular order or sequence.

Embodiment 1

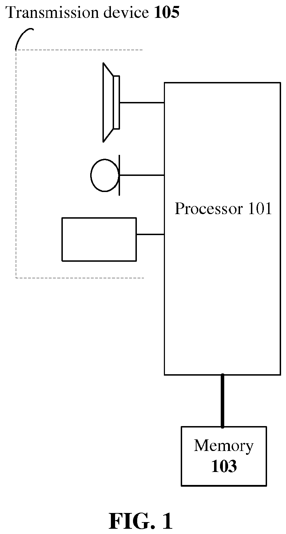

The method embodiment provided in embodiment 1 of the present application may be performed in a mobile terminal, a computer terminal or a similar computing device. Using running in a computer terminal as an example, as shown in FIG. 1, the computer terminal 10 may include one or more (only one is shown in FIG. 1) processors 101 (the processor 101 may include, but is not limited to, a processing device such as a microprocessor MCU or a programmable logic device FPGA), a memory 103 for storing data, and a transmission device 105 for communication functions. It is to be understood by those skilled in the art that the structure shown in FIG. 1 is merely illustrative and not intended to limit the structure of the preceding electronic device.

The memory 103 may be used for storing software programs and modules of application software, such as program instructions/modules corresponding to the device control method in embodiments of the present invention. The processor 101 executes the software programs and modules stored in the memory 103 to implement various functional applications and data processing, that is, implement the preceding method. The memory may include a high-speed random access memory, and may also include a non-volatile memory such as one or more magnetic storage devices, flash memories, or other non-volatile solid state memories. In some examples, the memory may further include memories that are remotely disposed with respect to the processor. These remote memories may be connected to the computer terminal via a network. Examples of the preceding network include, but are not limited to, the Internet, an intranet, a local area network, a mobile communication network and a combination thereof.

For example, the storage medium (that is the memory) may be configured to store program codes for performing the steps of acquiring a security identifier of a first account and a security identifier of objective data when a objective user accesses the objective data by using the first account; and determining that the objective user has a right to access the objective data in condition that the security identifier of the first account matches the security identifier of the objective data.

The transmission device is configured to receive or transmit data via a network. Examples of the preceding network may include a wireless network provided by a communication provider of the computer terminal. In one example, the transmission device includes a Network Interface Controller (NIC) that can be connected to other network devices through a base station to communicate with the Internet. In one example, the transmission device may be a Radio Frequency (RF) module for communicating with the Internet wirelessly.

First, the explanations given below are applicable to some of the nouns or the terms in the description of embodiments of the present invention.

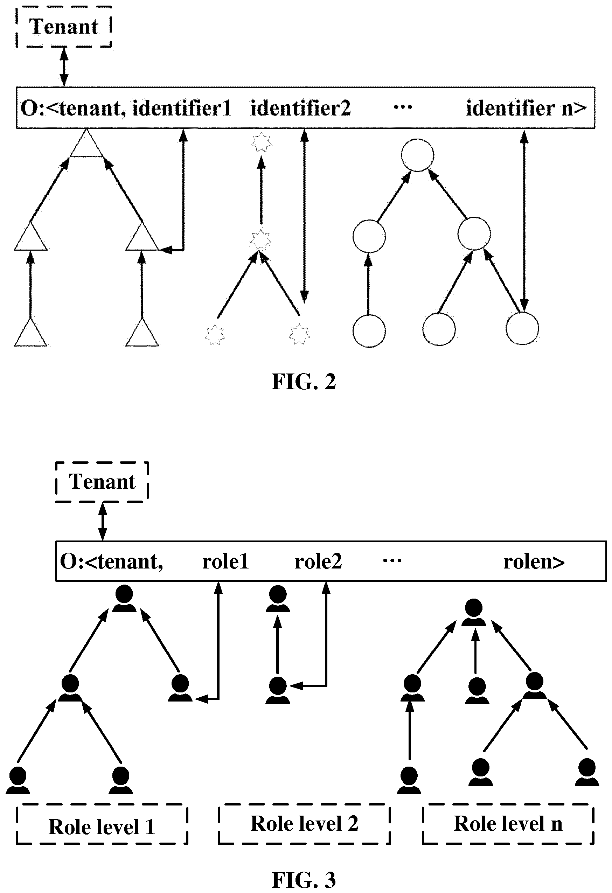

Object security identifier: objects are identified by using a hierarchical identifier model. As shown in FIG. 2, before the service is used, the internal administrator of the tenant partitions a company according to a need and a criterion (for example, region, department, security level, access type, etc.). On the basis of the partitioning information, an identifier forest composed of trees is constructed. Each tree is called a security identifier tree (SIT). Each node on the tree represents a controllable security identifier in the company. The object identifier is defined as follows: O: (tenant, SIS) or (tenant, identifier 1, identifier 2, ..., identifier n); SIS denotes security identifier set. The images of different shapes in FIG. 2 (such as a triangle, a hex and a circle) are used to represent different objects.

Subject security identifier: A subject is the visitor. The security identifier of the subject is acquired through the role the subject has. That is, the subject acquires a corresponding security identifier through the role the subject has. The role security identifier is defined in a similar to an object: R: (tenant, SIS) or (tenant, identifier 1, identifier 2, ..., identifier n). All roles of the tenant enterprise are represented in the form of a role forest (as shown in FIG. 3, the roles may be partitioned into multiple role levels, such as role level 1, role level 2 and role level n). To meet the security requirements of each company, each company needs to establish its own role forest before using the service. The subject identifier is defined as follows: S: (tenant, RS) or (tenant, role 1, role 2, ..., role n), RS denotes the role set of the user. Each role will be marked with a corresponding security identifier indicating its duty in the system.

Security identifier set (SIS): denotes a security identifier set of an object, and is denoted by SIS (x). When x is an object (such as a relationship or an attribute), SIS (x) denotes a security identifier set of the object. When x is a subject, for example, a user, SIS (x) denotes a security identifier of the subject. When x is a tenant, SIS (x) denotes a set of security identifiers and child security identifiers assigned by the tenant to the current tenant. To distinguish between a transferred security identifier assigned by the tenant and a non-transferred security identifier assigned by the tenant, SIS (t) is used to denote a non-transferred security identifier set assigned by the tenant.

Attribute security identifier set (ASIS): denotes a identifier set for marking an attribute and may be denoted by ASIS (x).

Extended Security Identifier Set (ESIS): denotes a set of all security identifiers of a user, including security identifiers of the tenant and bound security identifiers authorized by other tenants, and is denoted by

$$\text{ESIS(U)} = \text{SIS(U)} \cup (\cup_1^m (SIS(t_i) \cup \overline{SIS(t_i)})),$$

where m denotes the number of authorized tenants. ESIS (U) consists of a union of three parts described below.

(1) Security identifiers and child identifiers of the security identifiers which are allocated to a user by a tenant to which the user belongs and are denoted by SIS(U).

(2) Transferred security identifiers and child identifiers of the transferred security identifiers which are authorized to the user by other tenants and are denoted by SIS(t).

(3) Non-transferred security identifiers which are authorized to the user by other tenants and are denoted by $\overline{SIS(t)}$.

To facilitate understanding of this application, the explanations described below are applicable to some of the logical expressions in the description of embodiments of the present invention.

X > Y: denotes that X has a higher hierarchy than Y on a security identifier tree or X is the ancestor of Y. Xa denotes that security identifier X comes from tenant A.

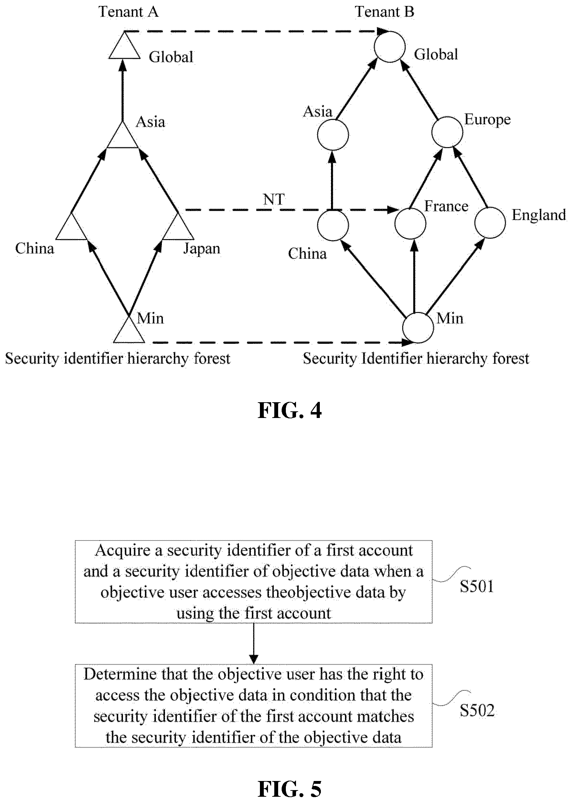

Xa->Yb: may also be written as $(X_a, X_b) \in$ Tab and denotes security identifier association, and Tab $\subseteq T_a * T_b$. As shown in FIG. 4, association between $Global_A$ and $Global_B$ indicates that the tenant A assigns its own Global identifiers to users having Global identifiers in tenant B. Such association may be denoted by $(Global_A, Global_B) \in$ Tab.

Transference association: if the association $X_A \rightarrow a_B$, $\forall Y \in B$ exists and if $Y_B > a_B$, then $Y_B > X_A$, as $Y_B$ includes the mapping of $a_B$, so $Y_B$ is also the ancestor of $X_A$. Association MinA->MinB can be seen in FIG. 4. Thus, users having Min identifiers in tenant B will have access to resources having Min identifiers in tenant A. That is, all ancestors of the MinB have access to resources having Min identifiers in the tenant A.

Non-transference association: The security administrator may intend to associate the security identifiers of the current tenant with the security identifiers of another tenant, and does not intend the ancestors of the security identifiers of the other tenant to inherit such transference association. For example, in FIG. 4, the security administrator of the tenant A intends to bind the $Japan_A$ identifier to the $France_B$ identifier of tenant B, and negates the inheritance of the association of $Europe_B$ and $France_B$. Therefore, the present application describes the concept of non-transference association. Non-transference association may be expressed as

$$X_A \xrightarrow{NT} Y_B$$

. In FIG. 4, $Japan_A$ and $France_B$ are in such association. Such mapping is represented as

$$Japan_A \xrightarrow{NT} France_B$$

.

Identifier association policies are described below.

(1) Default policy. When the users of tenant B intend to access the tenant A, the tenant A may provide default security access identifiers. For example, data marked by identifiers are insensitive and accessible by anyone so that inter-domain access is secure and easy to manage.

(2) Direct policy. Compared with the default policy, the direct policy is to bind all the identifiers that tenant B may need to use to access the system, fully satisfying the security access requirements of users. However, such assignment cannot satisfy different access requirements of different users. Assignment and management of identifiers will be a thorny problem. Sometimes, it is not desired that parent identifiers of identifiers bound to security identifiers have the same rights as the security identifiers. In this case, the tenant administrator needs to establish non-transference security identifier binding, and the identifier binding ordered pair may be denoted by $(X_A, Y_B)$ NT.

(3) Partial policy. For the sake of security, binding of security identifiers between two tenants requires one-by-one assignment by the system administrator and requires non-transference association. However, in some other cases, identifiers with established inheritance relationship may be assigned to a same identifier set. In this case, transference association may be used to reduce the complexity of the assignment relationship in the system, making identifier binding easier to manage. For example, if the tenant $T_B$ has security identifier $a_B$ and has corresponding identifier binding $(c_A, b_B)$ in tenant $T_A$, where $a_B$ is the parent identifier of security identifier $b_B$, then users having identifiers $a_B$ in tenant $T_B$ can directly obtain data having security identifier $c_A$ in the tenant A and it is not needed to re-assign identifier binding $(c_A,$

$a_B$).

Security identifiers are classified into two types described below.

(1) Line-level security identifier. A security identifier set is bound to relationship R to control the access by a user to R. Since R is marked as a whole, only two cases occur: The user can access R or the user cannot access R. R can be marked by $((A_1, A_2, ..., A_n), (SI_1, SI_2, ..., SI_m))$. $SI_1, SI_2, ... , SI_m$ belong to different security identifier trees, so the control rule of the line-level security identifier can be denoted by (T, SIS, R, Q), where T denotes the tenant to which the control rule belongs, SIS denotes security identifier set, R denotes the relational object SIS acts on, Q denotes the access control constraint condition.

(2) Column-level security identifier. To achieve more fine-granularity access control, it is feasible to mark the attribute of the relationship by a security identifier. That is, each attribute of the relationship R can be marked by a security identifier so that secure access is achieved. The attribute can be marked by $((A_1, SI_{a1}),(A_2,SI_{a2}),...,(A_n,SI_{an}),(SI_1,...,SI_m))$. The control rule of column-level security identifier can be denoted by (T, AIS, SIS, R, Q), where T denotes the tenant to which the rule belongs, AIS denotes the set of ordered pair (A, SI), SIS denotes security identifier set and is used for marking attributes not included in AIS, R denotes the relational object AIS and SIS act on, Q denotes the access control constraint condition.

According to this embodiment of the present invention, a method for determining an access right is provided. It is to be noted that the steps shown in the flowcharts in the accompanying drawings may be performed by a computer system such as a group of computers capable of executing instructions, and although logical sequences are shown in the flowcharts, the shown or described steps may be performed in sequences different from the sequences described herein in some cases.

FIG. 5 is a flowchart of a method for determining an access right according to an embodiment of the present invention. As shown in FIG. 5, this method includes the steps described below.

In step S501, a security identifier of a first account and a security identifier of objective data are acquired when an objective user accesses the objective data by using the first account.

In step S502, it is determined that the objective user has the right to access the objective data in condition that the security identifier of the first account matches the security identifier of the objective data.

According to the preceding embodiment, a security identifier of a first account and a security identifier of objective data are acquired when an objective user accesses the objective data by using the first account; and it is determined that the objective user has the right to access the objective data when the security identifier of the first account matches the security identifier of the objective data. This solves the problem of poor data security in the existing art and improves the data security.

Optionally, the preceding steps may be performed by a data management terminal, a management terminal for user access requests, or the like, but is not limited thereto.

In step S501, the step that the security identifier of the first account is acquired includes an objective role of the first account is acquired from a role forest, where the role forest includes a correspondence between an account and a role; and a security identifier corresponding to the objective role is acquired and is taken as the security identifier of the first account.

Before the objective role of the first account is acquired from the role forest, the method further includes that: the role forest set by a first object for a plurality of accounts is acquired, where each of the plurality of accounts has one or more roles; and each of the plurality of accounts is allocated to a respective user.

In the preceding embodiment, a control method for multi-tenant access based on security identifiers is provided. In this method, a corresponding role forest and a corresponding security identifier forest are established and maintained, and a security identifier is assigned for a role according to the duty of the role. Before a user accesses data, it is determined whether the user has access to the data on the basis of a comparison between the security identifier of the role and the security identifier required for data access. In this way, access is controlled and secure access to tenant data is ensured.

Optionally, the step that the security identifier corresponding to the objective role is acquired and is taken as the security identifier of the first account includes a first security identifier allocated by the first object to the objective role is acquired; and a second security identifier which is authorized by a second object to the first object and allowed to be used by the objective role is acquired. The security identifier of the first account includes the first security identifier and the second security identifier.

Specifically, the step that the second security identifier which is authorized by the second object to the first object and allowed to be used by the objective role is acquired includes: a third security identifier authorized by the second object to the objective role of the first object is acquired; and a fourth security identifier of a parent node of a node in which the objective role is located in the role forest is acquired. The fourth security identifier is authorized by the second object to a node of the first object and allowed to be transferred to and used by a child node of the node of the first object.

The preceding objects may be tenants.

In step S501, the step that the security identifier of the objective data is acquired includes: a security identifier of a node of the objective data is acquired from an identifier forest and the security identifier of the node of the objective data is taken as the security identifier of the objective data. The identifier forest includes a plurality of nodes and a security identifier of each of the plurality of nodes.

Optionally, the step that determining whether the security identifier of the first account matches the security identifier of the objective data includes at least one of determining whether a security identifier associated with the security identifier of the objective data exists among all security identifiers of the first account; determining whether the security identifier of the objective data is a preset security identifier, where the preset security identifier allows any account to access data; and determining whether a security identifier associated with a security identifier of an objective node exists among all security identifiers of the first account, where the objective node is one of all parent nodes of a node in which the objective role is located, and the one of all parent roles allows a security identifier thereof to be inherited to and used by a child node thereof. It is determined that the security identifier of the first account matches the security identifier of the objective data in condition that at least one of a plurality of determination results is obtained. The plurality of determination results include determining that the security identifier associated with the security identifier of the objective data exists among all security identifiers of the first account; determining that the security identifier of the objective data is the preset security identifier; and determining that the security identifier associated with the security identifier of the objective node exists among all security identifiers of the first account.

This embodiment of the present application is described in detail below in conjunction with implementation modes.

Implementation mode one

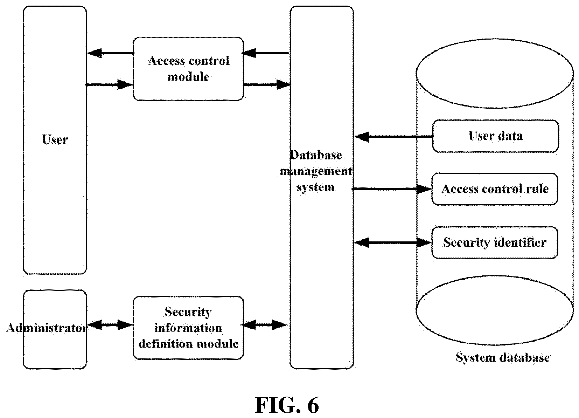

In the multi-tenant access method based on security identifiers provided in this application, the system architecture diagram is shown in FIG. 6. The system architecture mainly includes two modules: a security information definition module and an access control module.

(1) The security information definition module is responsible for defining a security identifier forest and marking an access subject and an access object in the system by using security identifiers, and also responsible for checking the integrity and the consistency of the security identifiers of the subject and the object.

(2) The access control module is responsible for controlling user access and making a final access control result according to the security identifiers of access subjects and objects in conjunction with the existing access control rule information.

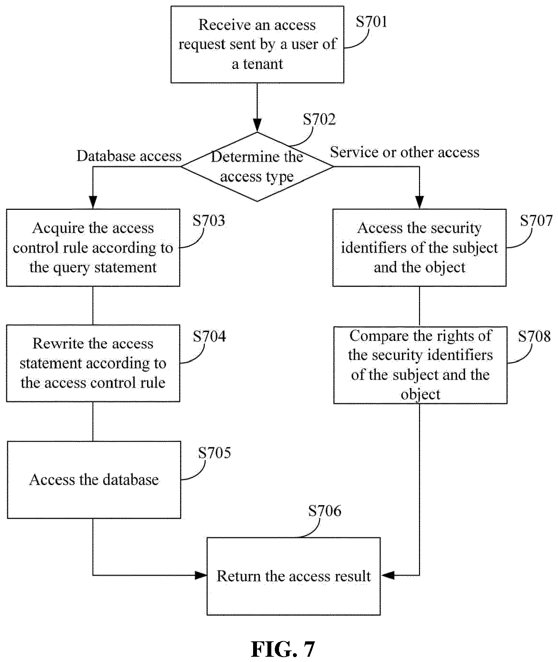

The access control module performs operations according to established rules. FIG. 7 is a flowchart of an access control method selected according to different user access types.

In step S701, an access request sent by a user of a tenant is received. Then, the corresponding security identifier set is acquired according to the access request.

In step S702, the access type is determined.

After the security identifier set is acquired, the right needs to be determined. Access to the resources may be divided into two types: the first type is the access to a database and the second type is the access to a service or others. In the case of the first type, step S703 is performed, and in the case of the second type, step S707 is performed.

In step S703, when the access type is the access to a database, the access control rule is acquired according to the query statement.

Because of different user access rights, the database fields which can be accessed by the user and the specific operations of the database are different. The unified access statement can be rewritten according to different user rights so that it is easy to obtain all the information the user can access in a table. Thus, it is needed to acquire the corresponding access control rule at the time of user access.

In step S704, the access statement is rewritten according to the access control rule.

When a table in a database is accessed, the security identifier labeled information of the table needs to be extracted first. When database information is shared, it is needed to use a security identifier association information table, that is, information about authorization of another tenant to the current tenant.

In step S705, the database is accessed.

In step S706, the access result is returned, and the user accepts the requested data.

For example, when a user of tenant A (who has an identifier IDENTIFIERa) performs an operation on the table, for example, the user accesses the attribute a of the tableX (the corresponding statement is select a from tableX), the conversion result for the current tenant is select a from tableX where tenantID='tenantAID'. At the same time, the tenant B in the system authorizes the tenant A, where the authorization information is the authorized binding between IDENTIFIERb and IDENTIFIERa. IDENTIFIERb enables the user in the tenant B to access the attribute a of tableX. Thus, the access statement of the tenant A is finally converted to select a from tableX where tenantID='tenantAID' or tenantID='tenantBID'. In this way, data sharing between tenants is achieved at the database layer, and efficiency of data sharing between tenants is improved.

In step S707, the security identifiers of the subject and the object to be accessed are acquired.

In step S708, the rights of the security identifiers of the subject and the object are compared.

For access to a service or other resources (such as a file), the security identifiers of the subject and the object to be accessed are first acquired, and then it is determined, according to the security level of the identifiers in the security identifier forest, whether the subject has corresponding right to access the objective object.

Implementation mode two

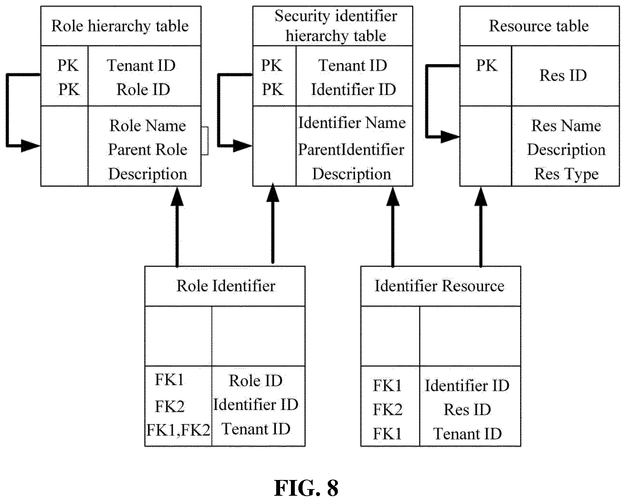

In the system, resources may be divided into database resources and other general resources, which are represented by the attribute ResType in the Resource table. Different control policies are implemented for these two types of resources. The following gives details with reference to FIG. 8.

(1) Table structure design

The main database tables include a role hierarchy table (named ROLE), a resource table (named RESOURCE), a security identifier hierarchy table (named IDENTIFIER), a role and identifier binding table (named ROLEIDENTIFIER), and a resource and identifier binding table (named IDENTIFIERRESOURCE), as shown in FIG. 8.

(2) System safety information

The definition of the system security information includes the definition of the security identifier forest, the definition of a role hierarchy forest, and the labeled security identifier of the subject and the object, and can be used for integrity and consistency checks of the security identifiers of the subject and the object.

The definition of the security identifier forest is important for the system security of the tenant. The system determines which tenant the identifier belongs to according to TenantID. ParentIdentifier denotes the parent identifiers of the identifier. When ParentIdentifier is NULL, the identifier is the root node of a certain identifier tree in the security identifier forest of the tenant. Thus, when the tenant administrator constructs the identifier forest, and new identifier forest and identifiers are mainly created involving the key methods createIdentifierTree and createIdentifier.

labeling of security identifiers: After the identifier system and the role system are established, the main task is to bind the corresponding security identifiers to the subject and the object in the system involving two methods: bindIdentifierToRole and bindIdentifierToRes, indicating marking roles and resources with security identifiers respectively.

To ensure the completeness of the system access control rules, and to ensure the completeness of the tenant security identifiers, after the tenant application is approved, the system administrator of the tenant needs to establish the corresponding security identifier forest according to the requirements of the tenant in which the system administrator is located and to provide the minimum privilege identifier of each security identifier tree. The system invokes the integrity check method to automatically mark each resource of the tenant with all minimum privilege identifiers to satisfy the integrity of the security identifiers. Meanwhile, to ensure the consistency of the tenant security identifiers, when a resource is marked with security identifiers, the system uses the consistency check method to compare each marked identifier with the security identifier that the resource already has. When neither this security identifier nor the existing security identifier is on the same identifier tree, this identifier is added. When this security identifier and the existing identifier are on the same identifier tree, the administrator is notified. With the consent of the administrator, the old identifier is replaced with a new identifier. In this case, the consistency requirement of resource security identifiers can be satisfied.

Implementation mode three

Three main modules are defined in the system: a database server process startup module, an access monitor module, and a back-end database operation module.

The database server process startup module is configured to receive a request of a tenant to access data and start the database server process after the tenant has successfully logged in.

The access monitor module is configured to control user access. The access monitor module makes a final access control result according to the security identifiers of the access subject and the access object and in conjunction with the existing access control rule information. Meanwhile, the access monitor module records tenant login and database operations to facilitate subsequent auditing.

The back-end database operation module is configured to perform specific database operations and to optimize access statements.

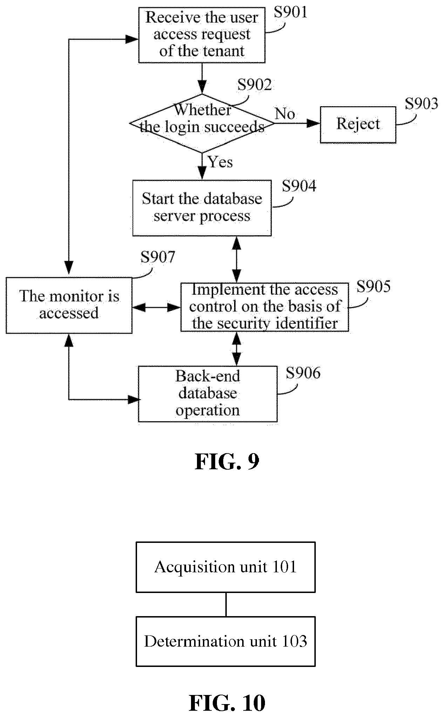

Referring to FIG. 9, the following describes an access control flow in detail. When a tenant logs in to a system, an authentication is first performed, and the access monitor module records tenant log-in information to facilitate subsequent auditing. When the tenant performs an operation such as a query, the system automatically submits an SQL query statement. In this case, the access monitor module checks the security identifiers of the relevant subject and object, and determines whether the operation conforms to the access control rule. If the operation conforms to the access control rule, the access is sent to the back-end database operation module, which performs the corresponding database operation after further optimizing the database operation.

In step S901, the user access request of the tenant is received. The user security identifiers and the system security rule data are checked.

In step S902, whether the login succeeds is determined. If the login succeeds, step S904 is performed;

otherwise, step S903 is performed. The user access statement is generated according to the existing information and is submitted to the database for access, and then it is determined whether or not the login succeeds.

In step S903, the user access request is rejected.

After the tenant makes a security marking for the object and makes a data access control rule, when a user accesses the database, the access control module checks the request of the user, and determines the access result of the user according to the data access control rule information already stored in the system. This is achieved by converting the access statement according to the data access control rule information, specifically as follows:

Assuming that tenant T has user U at this time, the access statement query submitted by tenant T is as follows:

Select $a_{q1}, a_{q2}, ... , a_{qn}$ from $R_{q1}, R_{q2}, ... , R_{qm}$ where $Q_q$

When the security marking on $R_{qi}$ by the tenant T is at the row level, that is, the object security identifier of $R_{qi}$ is (T, $AIS_{qi}$, $SIS_{qi}$, $R_{qi}$, $Q_{qi}$, then when $SIS(R_{qi}) \subseteq SIS(U)$, as long as the condition $Q_i$ is true, the user can access $a_{qi}$ this time.

When the security marking on $R_{qi}$ by the tenant T is at the column level, that is, the object security identifier of $R_{qi}$ is (T, $AIS_{qi}$, $SIS_{qi}$, $R_{qi}$, $Q_{qi}$), then when $SIS(a_{qi}) \subseteq SIS(U)$, the user can access $a_{qi}$ this time.

In step S904, the database server process is started.

In step S905, the access control is implemented on the basis of the security identifier.

In step S906, back-end database operation is performed.

In step S907, the monitor is accessed.

In this case, it is needed to use a rule already made in the system to convert this access statement. Assuming that the tenant T has the rule: $r_1$ = (T, ASIS, SIS, R, Q); then if and only if the rule satisfies the following conditions:

(1) The subset A = ($a_1$, $a_2$, ..., $a_m$) of the attribute set of relationship R is a subset of Aq = ($a_{q1}$, $a_{q2}$, ..., $a_{qm}$).

(2) $$U_1^m ASIS(a_i) \subseteq SIS(U)$$

When this statement is processed, a rule related to the tenant T is as follows:

$r_1$ = (T, ASIS, SIS, R, Q) ($1 \leq i \leq k$), where k is the k rules involved in the statement, and may be denoted by Rule (T, query), which means the set of rules involved by the tenant T in the query statement. Here, the following formulas apply.

(1) Rq = ($R_{q1}$, $R_{q2}$, ..., $R_{qm}$), $$R_r = U_1^k R(r_i)$$, where R($r_i$) denotes the relationship involved in rule $r_i$.

(2) $$Q_r = U_1^k Q(r_i)$$, where Q($r_i$) denotes the constraint condition involved in rule $r_i$.

The access statement may then be converted to the following statement Query (t):

Select $a_{q1}, a_{q2}, ... , a_{qn}$ from $R_q \cap R_r$ where $Q_q \cap Q_r$

For the tenant T, the access statement conversion is completed. For the statement conversion of the data of the other tenants to be accessed, the result of the conversion is a statement set for a certain query statement. The statement set may be denoted by

$$Q(U) = Query(T) \cup U_1^n Query(t_i)$$. Query (T)

denotes a conversion statement of the statement relative to the tenant to which the user belongs. $U_1^n Query(t_i)$ denotes a statement conversion set of the statement relative to other tenants. After the conversion is completed, submission is made for processing by the database.

Through the preceding embodiment, strong data isolation between tenants can be achieved. Before each access, it is needed to compare whether the security identifiers of the subject and the object belong to the same tenant, preventing a user from illegally accessing data of other tenants. Intra-tenant dada is flexibly isolated. That is, each tenant can flexibly define hierarchical subject roles and object identifier forest, and can satisfy different access control requirements of each tenant by freely identifying the subject and the object. Data between tenants is controlled and efficiently shared. Different tenants authorize security identifiers to each other to achieve the purpose of sharing so that tenants that have access rights can access shared data conveniently and efficiently and illegal access can be avoided.

From the description of the preceding implementation modes, it will be apparent to those skilled in the art that the method of the preceding embodiment may be implemented by use of software plus a necessary general-purpose hardware platform, or may, of course, be implemented by hardware, but in many cases, the former is a preferred implementation. Based on this understanding, the solution provided in the present invention substantially, or the part contributing to the existing art, may be embodied in the form of a software product. The software product is stored in a storage medium (such as a ROM/RAM, a magnetic disk or an optical disk) and includes several instructions for enabling a terminal (which may be a mobile phone, a computer, a server or a network device) to perform the method according to each embodiment of the present invention.

Embodiment 2

An apparatus for determining an access right is provided in this embodiment of the present invention. The apparatus is used for implementing the preceding embodiments and preferred implementation modes. What has been described will not be repeated. As used below, the term "module" may be software, hardware or a combination thereof capable of implementing preset functions. The apparatus in the embodiment described below is preferably implemented by software, but implementation by hardware or by a combination of software and hardware is also possible and conceived.

FIG. 10 is a schematic diagram of an apparatus for determining an access right according to an embodiment of the present invention. As shown in FIG. 10, the apparatus may include an acquisition unit 101 and a determination unit 103.

The acquisition unit 101 is configured to acquire a security identifier of a first account and a security identifier of objective data when an objective user accesses the objective data by using the first account.

The determination unit 103 is configured to determine that the objective user has the right to access the objective data in condition that the security identifier of the first account matches the security identifier of the objective data.

According to the preceding embodiment, the acquisition unit acquires a security identifier of a first account and a security identifier of objective data when an objective user accesses the objective data by using the first account; and the determination unit determines that the objective user has the right to access the objective data in condition that the security identifier of the first account matches the security identifier of the objective data. This solves the problem of poor data security in the existing art and improves the data security.

In the preceding embodiment, the acquisition unit includes a first acquisition module, which is configured to acquire an objective role of the first account from a role forest, where the role forest includes a correspondence between an account and a role; and a second acquisition module, which is configured to acquire a security identifier corresponding to the objective role and to take the security identifier corresponding to the objective role as the security identifier of the first account.

The acquisition unit includes a third acquisition module, which is configured to acquire the role forest set by a first object for a plurality of accounts, where each of the plurality of accounts has one or more roles; and an allocation module, which is configured to allocate each of the plurality of accounts to the respective user.

In one optional embodiment, the second acquisition module includes a first acquisition submodule, which is configured to acquire a first security identifier which is allocated by the first object to the objective role; and a second acquisition submodule, which is configured to acquire a second security identifier which is authorized by a second object to the first object and allowed to be used by the objective role. The security identifier of the first account includes the first security identifier and the second security identifier.

Optionally, the second acquisition submodule is further configured to acquire a third security identifier authorized by the second object to the objective role of the first object; and to acquire a fourth security identifier of a parent node of a node in which the objective role is located in the role forest. The fourth security identifier is authorized by the second object to a node of the first object and allowed to be transferred to and used by a child node of the node of the first object.

Optionally, the acquisition unit includes a fourth acquisition module, which is configured to acquire a security identifier of a node of the objective data from a identifier forest and to take the security identifier of the node of the objective data as the security identifier of the objective data. The identifier forest includes a plurality of nodes and a security identifier of each of the plurality of nodes.

Optionally, the apparatus further includes a determination unit, which is configured to determine whether the security identifier of the first account matches the security identifier of the objective data, where the determination unit includes a first determination module, which is configured to determine whether a security identifier associated with the security identifier of the objective data exists among all security identifiers of the first account; a second determination module, which is configured to determine whether the security identifier of the objective data is a preset security identifier, where the preset security identifier allows any account to access data; and a third determination module, which is configured to determine whether a security identifier associated with a security identifier of an objective node exists among all security identifiers of the first account, where the objective node is one of all parent nodes of a node in which the objective data is located, where the one of all parent nodes allows a security identifier thereof to be inherited to and used by a child node thereof. It is determined that the security identifier of the first account matches the security identifier of the objective data in condition that at least one of a plurality of determination results is obtained. The plurality of determination results include determining that the security identifier associated with the security identifier of the objective data exists among all security identifiers of the first account; determining that the security identifier of the objective data is the preset security identifier; and determining that the security identifier associated with the security identifier of the objective node exists among all security identifiers of the first account.

Through the preceding embodiment, strong data isolation between tenants can be achieved. Before each access, it is needed to compare whether the security identifiers of the subject and the object belong to the same tenant, preventing a user from illegally accessing data of other tenants. Intra-tenant dada is flexibly isolated. That is, each tenant can flexibly define hierarchical subject roles and object identifier forest, and can satisfy different access control requirements of each tenant by freely identifying the subject and the object. Data between tenants is controlled and efficiently shared. Different tenants authorize security identifiers to each other to achieve the purpose of sharing so that tenants that have access rights can access shared data conveniently and efficiently and illegal access can be avoided.

It is to be noted that the various modules described above may be implemented by software or hardware. Implementation by hardware may, but may not necessarily, be performed by the following method: The various modules described above are located in a same processor; or, in any combination, the various modules are located in different processors.

Embodiment 3

A storage medium is provided in this embodiment of the present invention. Optionally, in this embodiment, the storage medium may be configured to store program codes for performing the steps described below.

In S1, a security identifier of a first account and a security identifier of objective data are acquired when an objective user accesses the objective data by using the first account.

In S2, it is determined that the objective user has the right to access the objective data in condition that the security identifier of the first account matches the security identifier of the objective data.

Optionally, in this embodiment, the storage medium may include, but is not limited to, a U disk, a read-only memory (ROM), a random access memory (RAM), a mobile hard disk, a magnetic disk, an optical disk or another medium capable of storing program codes.

Optionally, in this embodiment, the processor executes, according to the program codes stored in the storage medium the steps of acquiring a security identifier of a first account and a security identifier of objective data when an objective user accesses the objective data by using the first account; and determining that the objective user has the right to access the objective data in condition that the security identifier of the first account matches the security identifier of the objective data.

Optionally, for specific examples in this embodiment, reference may be made to the examples described in the preceding embodiments and optional implementation modes, and the specific examples will not be repeated in this embodiment.

Apparently, those skilled in the art should know that each preceding module or step of the present invention may be implemented by a universal computing device, they may be concentrated on a single computing device or distributed in a network formed by multiple computing devices, and alternatively, they may be implemented by program codes executable by the computing devices, so that they may be stored in a storage device for execution by the computing devices, and in some circumstances, the illustrated or described steps may be executed in sequences different from those described herein, or they may be made into various integrated circuit modules separately, or multiple modules or steps therein may be made into a single integrated circuit module for implementation. Therefore, the present invention is not limited to any specific combination of hardware and software.

**Claims**

1.   A method for determining an access right, comprising:

   acquiring (S501) a security identifier of a first account and a security identifier of target data when a target user accesses the target data by using the first account; and
   determining (S502) that the target user has a right to access the target data in condition that the security identifier of the first account matches the security identifier of the target data;
   wherein the acquiring the security identifier of the first account comprises: acquiring a target role of the first account from a role forest, wherein the role forest comprises a correspondence between an account and a role; and acquiring a security identifier corresponding to the target role and taking the security identifier corresponding to the target role as the security identifier of the first account;
   wherein before the acquiring the target role of the first account from the role forest, the method further comprises: acquiring the role forest set by a first object for a plurality of accounts, wherein each of the plurality of accounts has one or more roles; and
   allocating each of the plurality of accounts to a respective user.

2.   The method of claim 1, wherein the acquiring the security identifier corresponding to the target role and taking the security identifier corresponding to the target role as the security identifier of the first account comprises:

   acquiring a first security identifier allocated by the first object to the target role; and
   acquiring a second security identifier which is authorized by a second object to the first object and allowed to be used by the target role, wherein the security identifier of the first account comprises the first security identifier and the second security identifier.

3.   The method of any one of claims 1 to 2, wherein the acquiring the security identifier of the target data comprises:
   acquiring a security identifier of a node of the target data from an identifier forest and taking the security identifier of the node of the target data as the security identifier of the target data, wherein the identifier forest comprises a plurality of nodes and a security identifier of each of the plurality of nodes.

4. The method of any one of claims 1 to 2, wherein the determining whether the security identifier of the first account matches the security identifier of the target data comprises at least one of:

> determining whether a security identifier associated with the security identifier of the target data exists among all security identifiers of the first account;
> determining whether the security identifier of the target data is a preset security identifier, wherein the preset security identifier allows any account to access data; and
> determining whether a security identifier associated with a security identifier of a target node exists among all security identifiers of the first account, wherein the target node is one of all parent nodes of a node in which the target data is located, and the one of all parent nodes allows a security identifier of the one of the all parent nodes to be inherited to and used by a child node of the one of the all parent nodes;
> wherein it is determined that the security identifier of the first account matches the security identifier of the target data in condition that at least one of a plurality of determination results is obtained, wherein the plurality of determination results comprise: determining that the security identifier associated with the security identifier of the target data exists among all security identifiers of the first account; determining that the security identifier of the target data is the preset security identifier; and determining that the security identifier associated with the security identifier of the target node exists among all security identifiers of the first account.

5. An apparatus for determining an access right, comprising:

> an acquisition unit (101), which is configured to acquire a security identifier of a first account and a security identifier of target data when a target user accesses the target data by using the first account; and
> a determination unit (103), which is configured to determine that the target user has a right to access the target data in condition that the security identifier of the first account matches the security identifier of the target data;
> wherein the acquisition unit comprises: a first acquisition module, which is configured to acquire a target role of the first account from a role forest, wherein the role forest comprises a correspondence between an account and a role; and a second acquisition module, which is configured to acquire a security identifier corresponding to the target role and to take the security identifier corresponding to the target role as the security identifier of the first account; wherein the acquisition unit comprises: a third acquisition module, which is configured to acquire the role forest set by a first object for a plurality of accounts, wherein each of the plurality of accounts has one or more roles; and an allocation module, which is configured to allocate each of the plurality of accounts to a respective user.

6. The apparatus of claim 5, wherein the second acquisition module comprises:

> a first acquisition submodule, which is configured to acquire a first security identifier allocated by the first object to the target role; and
> a second acquisition submodule, which is configured to acquire a second security identifier which is authorized by a second object to the first object and allowed to be used by the target role, wherein the security identifier of the first account comprises the first security identifier and the second security identifier.

7. The apparatus of any one of claims 5 to 6, wherein the acquisition unit comprises:
a fourth acquisition module, which is configured to acquire a security identifier of a node of the target data from a identifier forest and to take the security identifier of the node of the target data as the security identifier of the target data, wherein the identifier forest comprises a plurality of nodes and a security identifier of each of the plurality of nodes.

8. The apparatus of any one of claims 5 to 6, wherein the apparatus further comprises a determination unit, which is configured to determine whether the security identifier of the first account matches the security identifier of the target data, wherein the determination unit comprises:

> a first determination module, which is configured to determine whether a security identifier associated with the security identifier of the target data exists among all security identifiers of the first account;
> a second determination module, which is configured to determine whether the security identifier of the target data is a preset security identifier, wherein the preset security identifier allows any account to access data; and

a third determination module, which is configured to determine whether a security identifier associated with a security identifier of a target node exists among all security identifiers of the first account, wherein the target node is one of all parent nodes of a node in which the target data is located, and the one of all parent nodes allows a security identifier of the one of all parent nodes to be inherited to and used by a child node of the one of all patent nodes;

wherein it is determined that the security identifier of the first account matches the security identifier of the target data in condition that at least one of a plurality of determination results is obtained, wherein the plurality of determination results comprise: determining that the security identifier associated with the security identifier of the target data exists among all security identifiers of the first account; determining that the security identifier of the target data is the preset security identifier; and determining that the security identifier associated with the security identifier of the target node exists among all security identifiers of the first account.

9. A terminal, comprising:

a processor (101);
a memory (103), which is configured to store instructions executable by the processor (101); and
a transmission device (105), which is configured to perform information transmission and communication according to control of the processor (101),
wherein the processor (101) is configured to perform the units in any one of claims 5-6.

**Patentansprüche**

1. Verfahren zum Bestimmen eines Zugriffsrechts, umfassend:

Erfassen (S501) eines Sicherheitsidentifikators eines ersten Kontos und eines Sicherheitsidentifikators von Zieldaten, wenn ein Zielbenutzer unter Verwendung des ersten Kontos auf die Zieldaten zugreift; und
Bestimmen (S502), dass der Zielbenutzer ein Recht zum Zugriff auf die Zieldaten aufweist, unter der Bedingung, dass der Sicherheitsidentifikator des ersten Kontos mit dem Sicherheitsidentifikator der Zieldaten übereinstimmt;
wobei das Erfassen des Sicherheitsidentifikators des ersten Kontos Folgendes umfasst: Erfassen einer Zielrolle des ersten Kontos aus einem Rollenbestand, wobei der Rollenbestand eine Entsprechung zwischen einem Konto und einer Rolle umfasst; und Erfassen eines Sicherheitsidentifikators, der der Zielrolle entspricht, und Verwenden des Sicherheitsidentifikators, der der Zielrolle entspricht, als dem Sicherheitsidentifikator des ersten Kontos;
wobei das Verfahren vor dem Erfassen der Zielrolle des ersten Kontos aus dem Rollenbestand ferner Folgendes umfasst: Erfassen des von einem ersten Objekt eingestellten Rollenbestands für eine Vielzahl von Konten, wobei jedes aus der Vielzahl von Konten eine oder mehrere Rollen aufweist; und
Zuweisen jedes aus der Vielzahl von Konten an einen jeweiligen Benutzer.

2. Verfahren nach Anspruch 1, wobei das Erfassen des der Zielrolle entsprechenden Sicherheitsidentifikators und das Verwenden des der Zielrolle entsprechenden Sicherheitsidentifikators als dem Sicherheitsidentifikator des ersten Kontos Folgendes umfasst:

Erfassen eines ersten Sicherheitsidentifikators, die von dem ersten Objekt der Zielrolle zugewiesen wird; und
Erfassen eines zweiten Sicherheitsidentifikators, der durch ein zweites Objekt für das erste Objekt autorisiert ist und von der Zielrolle verwendet werden darf, wobei der Sicherheitsidentifikator des ersten Kontos den ersten Sicherheitsidentifikator und den zweiten Sicherheitsidentifikator umfasst.

3. Verfahren nach einem der Ansprüche 1 bis 2, wobei das Erfassen des Sicherheitsidentifikators der Zieldaten Folgendes umfasst: Erfassen eines Sicherheitsidentifikators eines Knotens der Zieldaten aus einem Identifikatorbestand und Verwenden des Sicherheitsidentifikators des Knotens der Zieldaten als den Sicherheitsidentifikator der Zieldaten, wobei der Identifikatorbestand eine Vielzahl von Knoten und einen Sicherheitsidentifikator jedes der Vielzahl von Knoten umfasst.

4. Verfahren nach einem der Ansprüche 1 bis 2, wobei das Bestimmen, ob der Sicherheitsidentifikator des ersten Kontos mit dem Sicherheitsidentifikator der Zieldaten übereinstimmt, mindestens eines von Folgenden umfasst:

Bestimmen, ob ein dem Sicherheitsidentifikator der Zieldaten zugeordneter Sicherheitsidentifikator unter allen Sicherheitsidentifikatoren des ersten Kontos existiert;
Bestimmen, ob der Sicherheitsidentifikator der Zieldaten ein voreingestellter Sicherheitsidentifikator ist, wobei der voreingestellte Sicherheitsidentifikator jedem Konto den Zugriff auf Daten erlaubt; und

Bestimmen, ob ein Sicherheitsidentifikator, der einem Sicherheitsidentifikator eines Zielknotens zugeordnet ist, unter allen Sicherheitsidentifikatoren des ersten Kontos existiert, wobei der Zielknoten einer von allen übergeordneten Knoten eines Knotens ist, in dem die Zieldaten lokalisiert sind, und der eine von allen übergeordneten Knoten zulässt, dass ein Sicherheitsidentifikator des einen von allen übergeordneten Knoten an einen untergeordneten Knoten des einen von allen übergeordneten Knoten vererbt und von diesem verwendet wird; wobei bestimmt wird, dass der Sicherheitsidentifikator des ersten Kontos mit dem Sicherheitsidentifikator der Zieldaten übereinstimmt, unter der Bedingung, dass mindestens eines einer Vielzahl von Bestimmungsergebnissen erhalten wird, wobei die Vielzahl von Bestimmungsergebnissen Folgendes umfasst: Bestimmen, dass der dem Sicherheitsidentifikator der Zieldaten zugeordnete Sicherheitsidentifikator unter allen Sicherheitsidentifikatoren des ersten Kontos existiert; Bestimmen, dass der Sicherheitsidentifikator der Zieldaten der voreingestellte Sicherheitsidentifikator ist; und Bestimmen, dass der dem Sicherheitsidentifikator des Zielknotens zugeordnete Sicherheitsidentifikator unter allen Sicherheitsidentifikatoren des ersten Kontos existiert.

**5.** Vorrichtung zur Bestimmung eines Zugriffsrechts, umfassend:

eine Erfassungseinheit (101), die dazu konfiguriert ist, einen Sicherheitsidentifikator eines ersten Kontos und einen Sicherheitsidentifikator von Zieldaten zu erfassen, wenn ein Zielbenutzer unter Verwendung des ersten Kontos auf die Zieldaten zugreift; und eine Bestimmungseinheit (103), die dazu konfiguriert ist, zu bestimmen, dass der Zielbenutzer ein Recht hat, auf die Zieldaten zuzugreifen, unter der Bedingung, dass der Sicherheitsidentifikator des ersten Kontos mit dem Sicherheitsidentifikator der Zieldaten übereinstimmt; wobei die Erfassungseinheit Folgendes umfasst: ein erstes Erfassungsmodul, das dazu konfiguriert ist, eine Zielrolle des ersten Kontos aus einem Rollenbestand zu erfassen, wobei der Rollenbestand eine Entsprechung zwischen einem Konto und einer Rolle umfasst; und ein zweites Erfassungsmodul, das dazu konfiguriert ist, einen der Zielrolle entsprechenden Sicherheitsidentifikator zu erfassen und den der Zielrolle entsprechenden Sicherheitsidentifikator als den Sicherheitsidentifikator des ersten Kontos zu verwenden;

wobei die Erfassungseinheit Folgendes umfasst: ein drittes Erfassungsmodul, das dazu konfiguriert ist, den von einem ersten Objekt eingestellten Rollenbestand für eine Vielzahl von Konten zu erfassen, wobei jedes aus der Vielzahl von Konten eine oder mehrere Rollen aufweist; und ein Zuweisungsmodul, das dazu konfiguriert ist, jedes aus der Vielzahl von Konten einem jeweiligen Benutzer zuzuweisen.

**6.** Vorrichtung nach Anspruch 5, wobei das zweite Erfassungsmodul Folgendes umfasst:

ein erstes Erfassungssubmodul, das dazu konfiguriert ist, einen ersten Sicherheitsidentifikator zu erfassen, der von dem ersten Objekt der Zielrolle zugewiesen wird; und ein zweites Erfassungssubmodul, das dazu konfiguriert ist, einen zweiten Sicherheitsidentifikator zu erfassen, der durch ein zweites Objekt für das erste Objekt autorisiert ist und von der Zielrolle verwendet werden darf, wobei der Sicherheitsidentifikator des ersten Kontos den ersten Sicherheitsidentifikator und den zweiten Sicherheitsidentifikator umfasst.

**7.** Vorrichtung nach einem der Ansprüche 5 bis 6, wobei die Erfassungseinheit Folgendes umfasst: ein viertes Erfassungsmodul, das dazu konfiguriert ist, einen Sicherheitsidentifikator eines Knotens der Zieldaten aus einem Identifikatorbestand zu erfassen und den Sicherheitsidentifikator des Knotens der Zieldaten als den Sicherheitsidentifikator der Zieldaten zu verwenden, wobei der Identifikatorbestand eine Vielzahl von Knoten und einen Sicherheitsidentifikator jedes der Vielzahl von Knoten umfasst.

**8.** Vorrichtung nach einem der Ansprüche 5 bis 6, wobei die Vorrichtung ferner eine Bestimmungseinheit umfasst, die dazu konfiguriert ist, zu bestimmen, ob der Sicherheitsidentifikator des ersten Kontos mit dem Sicherheitsidentifikator der Zieldaten übereinstimmt, wobei die Bestimmungseinheit Folgendes umfasst:

ein erstes Bestimmungsmodul, das dazu konfiguriert ist, zu bestimmen, ob ein dem Sicherheitsidentifikator der Zieldaten zugeordneter Sicherheitsidentifikator unter allen Sicherheitsidentifikatoren des ersten Kontos existiert; ein zweites Bestimmungsmodul, das dazu konfiguriert ist, zu bestimmen, ob der Sicherheitsidentifikator der Zieldaten ein voreingestellter Sicherheitsidentifikator ist, wobei der voreingestellte Sicherheitsidentifikator jedem Konto erlaubt, auf Daten zuzugreifen; und

ein drittes Bestimmungsmodul, das dazu konfiguriert ist, zu bestimmen, ob ein Sicherheitsidentifikator, der einem Sicherheitsidentifikator eines Zielknotens zugeordnet ist, unter allen Sicherheitsidentifikatoren des ersten Kontos existiert, wobei der Zielknoten einer von allen übergeordneten Knoten eines Knotens ist, in dem die Zieldaten lokalisiert sind, und der eine von allen übergeordneten Knoten zulässt, dass ein Sicherheitsidentifikator des einen von allen übergeordneten Knoten an einen untergeordneten Knoten des einen von allen übergeordneten Knoten vererbt und von diesem verwendet wird; wobei bestimmt wird, dass der Sicherheitsidentifikator des ersten Kontos mit dem Sicherheitsidentifikator der Zieldaten übereinstimmt, unter der Bedingung, dass mindestens eines einer Vielzahl von Bestimmungsergebnissen erhalten wird, wobei die Vielzahl von Bestimmungsergebnissen Folgendes umfasst: Bestimmen, dass der dem Sicherheitsidentifikator der Zieldaten zugeordnete Sicherheitsidentifikator unter allen Sicherheitsidentifikatoren des ersten Kontos existiert; Bestimmen, dass der Sicherheitsidentifikator der Zieldaten der voreingestellte Sicherheitsidentifikator ist; und Bestimmen, dass der dem Sicherheitsidentifikator des Zielknotens zugeordnete Sicherheitsidentifikator unter allen Sicherheitsidentifikatoren des ersten Kontos existiert.

9. Endgerät, umfassend:

einen Prozessor (101);
einen Speicher (103), der dazu konfiguriert ist, Anweisungen zu speichern, die durch den Prozessor (101) ausführbar sind; und
ein Übertragungsgerät (105), das dazu konfiguriert ist, eine Informationsübertragung und -kommunikation gemäß der Steuerung des Prozessors (101) durchzuführen;
wobei der Prozessor (101) dazu konfiguriert ist, die Einheiten nach einem der Ansprüche 5-6 durchzuführen.

**Revendications**

1. Procédé de détermination d'un droit d'accès, comprenant :

l'acquisition (S501) d'un identifiant de sécurité d'un premier compte et d'un identifiant de sécurité de données cibles lorsqu'un utilisateur cible accède aux données cibles à l'aide du premier compte ; et
la détermination (S502) que l'utilisateur cible dispose d'un droit d'accès aux données cibles à condition que l'identifiant de sécurité du premier compte corresponde à l'identifiant de sécurité des données cibles ;
dans lequel l'acquisition de l'identifiant de sécurité du premier compte comprend : l'acquisition d'un rôle cible du premier compte auprès d'une forêt de rôles, dans lequel la forêt de rôles comprend une correspondance entre un compte et un rôle ; et l'acquisition d'un identifiant de sécurité correspondant au rôle cible et la prise de l'identifiant de sécurité correspondant au rôle cible en tant qu'identifiant de sécurité du premier compte ;
dans lequel avant l'acquisition du rôle cible du premier compte à partir de la forêt de rôles, le procédé comprend également : l'acquisition de la forêt de rôles définie par un premier objet pour une pluralité de comptes, dans lequel chacun de la pluralité de comptes dispose d'un ou de plusieurs rôles ; et
l'attribution de chacun de la pluralité de comptes à un utilisateur respectif.

2. Procédé selon la revendication 1, dans lequel l'acquisition de l'identifiant de sécurité correspondant au rôle cible et la prise de l'identifiant de sécurité correspondant au rôle cible en tant qu'identifiant de sécurité du premier compte comprend :

l'acquisition d'un premier identifiant de sécurité attribué par le premier objet au rôle cible ; et
l'acquisition d'un second identifiant de sécurité qui est autorisé par un second objet au premier objet et autorisé à être utilisé par le rôle cible, dans lequel l'identifiant de sécurité du premier compte comprend le premier identifiant de sécurité et le second identifiant de sécurité.

3. Procédé selon l'une quelconque des revendications 1 à 2, dans lequel l'acquisition de l'identifiant de sécurité des données cibles comprend :
l'acquisition d'un identifiant de sécurité d'un noeud des données cibles à partir d'une forêt d'identifiants et la prise de l'identifiant de sécurité du noeud des données cibles en tant qu'identifiant de sécurité des données cibles, dans lequel la forêt d'identifiants comprend une pluralité de noeuds et un identifiant de sécurité de chacun parmi la pluralité de noeuds.

4. Procédé selon l'une quelconque des revendications 1 à 2, dans lequel la détermination du fait de savoir si l'identifiant de sécurité du premier compte correspond à l'identifiant de sécurité des données cibles comprend au moins l'une de :

la détermination du fait de savoir si un identifiant de sécurité associé à l'identifiant de sécurité des données cibles existe parmi tous les identifiants de sécurité du premier compte ;
la détermination du fait de savoir si l'identifiant de sécurité des données cibles est un identifiant de sécurité prédéfini, dans lequel l'identifiant de sécurité prédéfini permet à un quelconque compte d'accéder à des données ; et
la détermination du fait de savoir si un identifiant de sécurité associé à un identifiant de sécurité d'un noeud cible existe parmi tous les identifiants de sécurité du premier compte, dans lequel le noeud cible est l'un parmi tous les noeuds parents d'un noeud dans lequel se trouvent les données cibles, et l'un parmi tous les noeuds parents permet à un identifiant de sécurité de l'un parmi tous les noeuds parents d'être hérité et utilisé par un noeud enfant de l'un parmi tous les noeuds parents ;
dans lequel il est déterminé que l'identifiant de sécurité du premier compte correspond à l'identifiant de sécurité des données cibles à condition qu'au moins l'un parmi une pluralité de résultats de détermination soit obtenu, dans lequel la pluralité de résultats de détermination comprend : la détermination que l'identifiant de sécurité associé à l'identifiant de sécurité des données cibles existe parmi tous les identifiants de sécurité du premier compte ; la détermination que l'identifiant de sécurité des données cibles est l'identifiant de sécurité prédéfini ; et la détermination que l'identifiant de sécurité associé à l'identifiant de sécurité du noeud cible existe parmi tous les identifiants de sécurité du premier compte.

5. Appareil de détermination d'un droit d'accès, comprenant :

une unité d'acquisition (101), qui est configurée pour acquérir un identifiant de sécurité d'un premier compte et un identifiant de sécurité de données cibles lorsqu'un utilisateur cible accède aux données cibles à l'aide du premier compte ; et
une unité de détermination (103), qui est configurée pour déterminer que l'utilisateur cible dispose d'un droit d'accès aux données cibles à condition que l'identifiant de sécurité du premier compte corresponde à l'identifiant de sécurité des données cibles ;
dans lequel l'unité d'acquisition comprend : un premier module d'acquisition, qui est configuré pour acquérir un rôle cible du premier compte à partir d'une forêt de rôles, dans lequel la forêt de rôles comprend une correspondance entre un compte et un rôle ; et un deuxième module d'acquisition, qui est configuré pour acquérir un identifiant de sécurité correspondant au rôle cible et pour prendre l'identifiant de sécurité correspondant au rôle cible en tant qu'identifiant de sécurité du premier compte ;
dans lequel l'unité d'acquisition comprend : un troisième module d'acquisition, qui est configuré pour acquérir la forêt de rôles définie par un premier objet pour une pluralité de comptes, dans lequel chacun de la pluralité de comptes dispose d'un ou de plusieurs rôles ; et un module d'attribution, qui est configuré pour attribuer chacun de la pluralité de comptes à un utilisateur respectif.

6. Appareil selon la revendication 5, dans lequel le deuxième module d'acquisition comprend :

un premier sous-module d'acquisition, qui est configuré pour acquérir un premier identifiant de sécurité attribué par le premier objet au rôle cible ; et
un second sous-module d'acquisition, qui est configuré pour acquérir un second identifiant de sécurité qui est autorisé par un second objet au premier objet et autorisé à être utilisé par le rôle cible, dans lequel l'identifiant de sécurité du premier compte comprend le premier identifiant de sécurité et le second identifiant de sécurité.

7. Appareil selon l'une quelconque des revendications 5 à 6, dans lequel l'unité d'acquisition comprend : un quatrième module d'acquisition, qui est configuré pour acquérir un identifiant de sécurité d'un noeud des données cibles à partir d'une forêt d'identifiants et prendre l'identifiant de sécurité du noeud des données cibles en tant qu'identifiant de sécurité des données cibles, dans lequel la forêt d'identifiants comprend une pluralité de noeuds et un identifiant de sécurité de chacun parmi la pluralité de noeuds.

8. Appareil selon l'une quelconque des revendications 5 à 6, dans lequel l'appareil comprend également une unité de détermination, qui est configurée pour déterminer le fait de savoir si l'identifiant de sécurité du premier compte correspond à l'identifiant de sécurité des données cibles, dans lequel l'unité de détermination comprend :

un premier module de détermination, qui est configuré pour déterminer le fait de savoir si un identifiant de sécurité associé à l'identifiant de sécurité des données cibles existe parmi tous les identifiants de sécurité du premier compte ;
un deuxième module de détermination, qui est configuré pour déterminer le fait de savoir si l'identifiant de sécurité des données cibles est un identifiant de sécurité prédéfini, dans lequel l'identifiant de sécurité prédéfini permet à un compte d'accéder à des données ; et
un troisième module de détermination, qui est configuré pour déterminer le fait de savoir si un identifiant de sécurité associé à un identifiant de sécurité d'un noeud cible existe parmi tous les identifiants de sécurité du premier compte, dans lequel le noeud cible est l'un parmi tous les noeuds parents d'un noeud dans lequel se trouvent les données cibles, et l'un parmi tous les noeuds parents permet à un identifiant de sécurité de l'un parmi tous les noeuds parents d'être hérité et utilisé par un noeud enfant de l'un parmi tous les noeuds parents ;

dans lequel il est déterminé que l'identifiant de sécurité du premier compte correspond à l'identifiant de sécurité des données cibles à condition qu'au moins l'un parmi une pluralité de résultats de détermination soit obtenu, dans lequel la pluralité de résultats de détermination comprend : la détermination que l'identifiant de sécurité associé à l'identifiant de sécurité des données cibles existe parmi tous les identifiants de sécurité du premier compte ; la détermination que l'identifiant de sécurité des données cibles est l'identifiant de sécurité prédéfini ; et la détermination que l'identifiant de sécurité associé à l'identifiant de sécurité du noeud cible existe parmi tous les identifiants de sécurité du premier compte.

9. Terminal, comprenant :

   un processeur (101) ;
   une mémoire (103), qui est configurée pour stocker des instructions exécutables par le processeur (101) ; et
   un dispositif de transmission (105), qui est configuré pour réaliser une communication et une transmission d'informations selon la commande du processeur (101) ;
   dans lequel le processeur (101) est configuré pour réaliser les unités selon l'une quelconque des revendications 5 à 6.

Transmission device **105**

Processor 101

Memory **103**

**FIG. 1**

Tenant

O:<tenant, identifier1   identifier2   ···   identifier n>

**FIG. 2**

Tenant

O:<tenant,   role1   role2   ···   rolen>

Role level 1     Role level 2     Role level n

**FIG. 3**

**FIG. 4**

**FIG. 5**

**FIG. 6**

```
                    ┌──────────────────────┐
                    │   Receive an access  │  S701
                    │ request sent by a user of │
                    │       a tenant       │
                    └──────────┬───────────┘
                               │
                               │         S702
                               ▼
        Database access    ◇──────────────◇   Service or other access
        ┌──────────────────│ Determine the │──────────────────┐
        │                  │  access type  │                  │
        ▼                  ◇──────────────◇                  ▼
┌──────────────────┐                          ┌──────────────────────┐
│  Acquire the access │  S703                 │  Access the security  │  S707
│ control rule according to │                 │ identifiers of the subject │
│   the query statement │                     │     and the object    │
└─────────┬────────┘                          └──────────┬───────────┘
          │                                               │
          ▼                                               ▼
┌──────────────────┐                          ┌──────────────────────┐
│  Rewrite the access │  S704                 │  Compare the rights of │  S708
│ statement according to │                    │ the security identifiers │
│ the access control rule │                   │ of the subject and the │
└─────────┬────────┘                          │        object         │
          │                                   └──────────┬───────────┘
          ▼                                               │
┌──────────────────┐                                      │
│ Access the database │  S705                             │
└─────────┬────────┘                                      │
          │                        S706                   │
          │                   ┌──────────────────┐        │
          └──────────────────▶│ Return the access result │◀───────┘
                              └──────────────────┘
```

**FIG. 7**

| Role hierarchy table | |
|---|---|
| PK PK | Tenant ID Role ID |
| | Role Name Parent Role Description |

| Security identifier hierarchy table | |
|---|---|
| PK PK | Tenant ID Identifier ID |
| | Identifier Name ParentIdentifier Description |

| Resource table | |
|---|---|
| PK | Res ID |
| | Res Name Description Res Type |

| Role Identifier | |
|---|---|
| | |
| FK1 FK2 FK1,FK2 | Role ID Identifier ID Tenant ID |

| Identifier Resource | |
|---|---|
| | |
| FK1 FK2 FK1 | Identifier ID Res ID Tenant ID |

## FIG. 8

Receive the user
access request
of the tenant

S901

S902

Whether
the login succeeds

No

Reject

S903

Yes

Start the database
server process

S904

S907

The monitor is
accessed

Implement the access
control on the basis of
the security identifier

S905

Back-end
database
operation

S906

**FIG. 9**

Acquisition unit 101

Determination unit 103

**FIG. 10**

**EP 3 547 634 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1084464 A1
- US 5414852 A